(19) Europäisches Patentamt
European Patent Office
Office européen des brevets

(11) **EP 4 123 491 A1**

(12) **EUROPEAN PATENT APPLICATION**
published in accordance with Art. 153(4) EPC

(43) Date of publication:
**25.01.2023 Bulletin 2023/04**

(21) Application number: **21772151.3**

(22) Date of filing: **17.03.2021**

(51) International Patent Classification (IPC):
**G06F 21/62** (2013.01)

(52) Cooperative Patent Classification (CPC):
**G06F 21/62**

(86) International application number:
**PCT/JP2021/010736**

(87) International publication number:
**WO 2021/187506 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2020 JP 2020049031**

(71) Applicant: **Sony Group Corporation
Tokyo 108-0075 (JP)**

(72) Inventors:
• **UMEDA, Tetsuo
Tokyo 108-0075 (JP)**
• **MARUYAMA, Shinya
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **DATA PROCESSING DEVICE, DATA PROCESSING METHOD, AND DATA PROCESSING PROGRAM**

(57) A data processing device includes: a noise distribution prediction unit configured to predict distribution of noise in noise-added data generated by adding the noise to original data in an external noise-adding device; and an augmentation processing unit configured to perform augmentation processing on the noise-added data on the basis of a prediction result of the noise distribution.

FIG. 14

EP 4 123 491 A1

**Description**

TECHNICAL FIELD

The present technology relates to a data processing device, a data processing method, and a data processing program.

BACKGROUND ART

In recent years, with the development of the Internet and the spread of devices that can connect to the Internet, various data in the devices are collected by companies that provide Internet services, companies that develop and know the devices, and the like, and are used for service improvement, product development, and the like. One of useful data among such data is data about an individual user who uses the device. There are various data about the individual user, such as a method of using the device and the usage status of services on the Internet via the device.

While such data about the individual user has high utility value, there is a problem that privacy of the user is invaded due to data leakage, data handling method, and the like. Therefore, a technology called differential privacy is used to prevent invasion of privacy (Patent Document 1).

Differential privacy is a technology to make it possible to use data itself while preventing identification of a user who is the core of the data, and the like by adding noise to the collected data. It is possible not to give statistical confidence of a certain level or more to the hypothesis that "some data belongs to a specific user". Since mathematical security is given even against attacks by arbitrary background knowledge, differential privacy has a feature to quantitatively evaluate the influence on privacy. The use of differential privacy allows prevention of invasion of user privacy even in a case where data is collected without the consent of the user. Differential privacy includes output type differential privacy and local type differential privacy.

Output type differential privacy collects raw data from a device and manages the data in a database built in the cloud. When accessing the database and utilizing the data, a user of the data adds noise and exhibits the data, thereby protecting the user's privacy. Since a business operator that provides the cloud service manages the raw data, there are concerns about a user's psychological barrier caused by the raw data being collected, a business risk of the business operator when the data leaks, and the like.

Local type differential privacy is a method in which noise is added by a device the users has and anonymized data is collected in the cloud. When utilizing the data, it is possible to obtain statistical values from the cloud with the noise removed. Since the data is collected in an anonymized state, the user's psychological barrier is low, and the business risk of the business operator when the data leaks is also small.

CITATION LIST

PATENT DOCUMENT

Patent Document 1: RAPPOR: Randomized Aggregatable Privacy-Preserving Ordinal Response

SUMMARY OF THE INVENTION

PROBLEMS TO BE SOLVED BY THE INVENTION

Since such differential privacy is more precise when there is a large amount of data to collect, it is normally assumed that there is a large amount of data to collect. However, depending on the type of data, it may not be possible to collect a large amount of data, and for such data, there is a problem that differential privacy cannot be used properly.

The present technology has been made in view of such points and an object is to provide a data processing device, a data processing method, and a data processing program that can reduce the error of statistical results even with a small amount of data by adding noise to the data and increasing the amount of data.

SOLUTIONS TO PROBLEMS

To solve the above-described problem, the first technology is a data processing device including: a noise distribution prediction unit configured to predict distribution of noise in noise-added data generated by adding the noise to original data in an external noise-adding device; and an augmentation processing unit configured to perform augmentation processing on the noise-added data on the basis of a prediction result of the noise distribution.

Furthermore, the second technology is a data processing method including: predicting distribution of noise in noise-added data generated by adding the noise to original data in an external noise-adding device; and performing augmentation processing on the noise-added data on the basis of a prediction result of the noise distribution.

Furthermore, the third technology is a data processing program for causing a computer to execute a data processing method including: predicting distribution of noise in noise-added data generated by adding the noise to original data in an external noise-adding device; and performing augmentation processing on the noise-added data on the basis of a prediction result of the noise distribution.

BRIEF DESCRIPTION OF DRAWINGS

Fig. 1 is a diagram for describing an outline of differential privacy.
Fig. 2 is a group of graphs showing the relationship between sample size, dictionary size, and error.
Figs. 3A to 3E are a group of graphs showing the relationship between data distribution and error, and Fig. 3F is a graph showing relative error of the data distribution.
Fig. 4 is a graph showing the relationship between the data distribution and privacy index.
Fig. 5 is a graph showing the relationship between coefficient of variation and relative error.
Fig. 6 is an explanatory diagram of sample size and noise.
Fig. 7 is a block diagram showing a configuration of a data processing system 10.
Fig. 8 is a diagram showing a state in which the entire area of Japan is covered using a primary mesh.
Fig. 9 is a block diagram showing a configuration of a terminal device 100.
Fig. 10 is a block diagram showing a configuration of a noise-adding device 200.
Fig. 11 is an explanatory diagram of lower-order data and higher-order data using a regional mesh as an example.
Fig. 12 is an explanatory diagram of noise addition to lower-order data and higher-order data using a regional mesh as an example.
Fig. 13 is a block diagram showing a configuration of a server device 300.
Fig. 14 is a block diagram showing a configuration of a data processing device 400.
Fig. 15 is an explanatory diagram of a count value (sample size) for each regional mesh (data type).
Fig. 16 is a flowchart showing processing in the noise-adding device 200.
Fig. 17 is a flowchart showing processing in the data processing device 400.
Fig. 18 is an explanatory diagram of data extension processing.
Fig. 19 is an explanatory diagram of data extension processing.
Fig. 20 is a graph showing a noise distribution prediction result.
Fig. 21 is a flowchart showing augmentation processing.
Fig. 22 is an explanatory diagram of the count value (sample size) with noise added by the augmentation processing.
Fig. 23 is a graph showing a comparison between original data and augmented data.
Fig. 24A is a comparative graph of the original data and noise-added data, Fig. 24B is a comparative graph of noise with variation and noise with uniform distribution, and Fig. 24C is a comparative graph of the original data and the augmented data.

MODE FOR CARRYING OUT THE INVENTION

An embodiment of the present technology will be described below with reference to the drawings. Note that the description will be made in the following order.

<1. Description of differential privacy>
<2. Embodiment>

[2-1. Configuration of data processing system 10]
[2-2. Description of regional mesh]
[2-3. Configuration of terminal device 100 and noise-adding device 200]
[2-4. Configuration of server device 300 and data processing device 400]
[2-5. Processing in noise-adding device 200]
[2-6. Processing in data processing device 400]

<3. Modifications>

<1. Description of differential privacy>

To begin with, before describing the embodiment of the present technology, differential privacy to use in the present technology will be described. Differential privacy is a technology to make it possible to use data itself while preventing identification of a user who is the core of the data, and the like by adding noise to the collected data. The present technology uses local type differential privacy in which a device the user has (corresponding to terminal device 100 of the embodiment) adds noise, and anonymized data is collected by the cloud (corresponding to server device 300 of the embodiment).

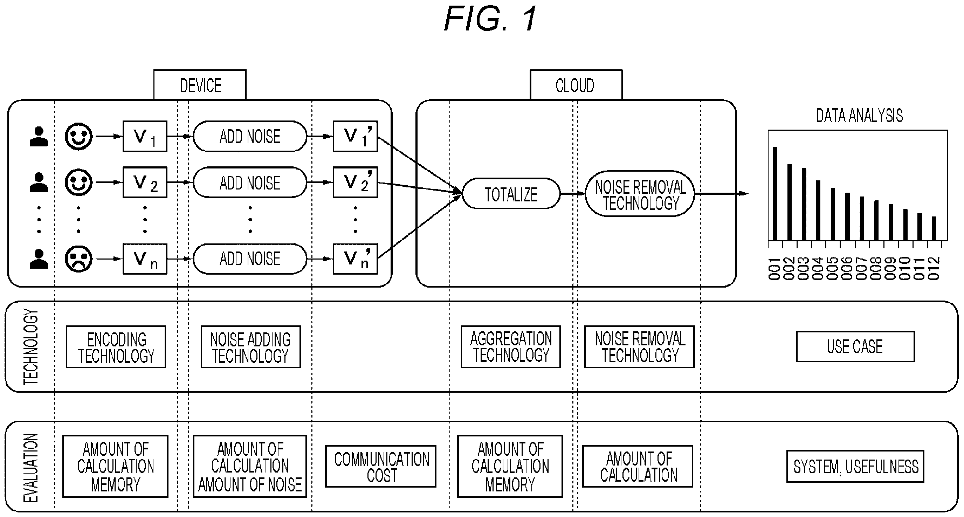

As shown in the schematic diagram of Fig. 1, local type differential privacy includes an encoding technology in which the device encodes data to generate a bit string $v^1$, noise-adding technology to generate noise-added data $v_1'$ according to the random variable in the bit string $vi$, aggregation technology to collect the noise-added data, noise removal technology to remove the noise from the aggregated data (aggregation technology and noise removal technology are often executed at the same time, and are sometimes collectively referred to as decoding technology), and data analysis technology to perform visualization processing according to analysis use cases.

In the present technology, when using differential privacy, "sample size", "dictionary size", and "privacy index" are used as main parameters.

The sample size indicates the total number of data collected by the cloud. The sample size can be defined as "the number of users having devices x the number of data transmitted from each device to the cloud".

The dictionary size indicates the total number of data type included in a dictionary. The dictionary is a set of data collected for each data type indicating the classification of data, and corresponds to the data set in the claims.

The dictionary size is determined by the number of data types. For example, since there are four gender categories defined in ISO 5218: male, female, unknown, and inapplicable, the number of data types is 4, and in this case, the dictionary size = 4. Furthermore, for example, in a case where pictograms are used for character input in a smartphone and the like, the number of pictograms is currently about 2600, the number of data types is about 2600, and in this case, the dictionary size = about 2600. Furthermore, in a case where positional information on a global positioning system (GPS) is mapped to a regional mesh of 1 $km^2$, the number of meshes will be about 380,000, and therefore the number of data types is about 380,000, and the dictionary size = about 380,000.

The privacy index indicates the degree of privacy protection in differential privacy. As the value of privacy index decreases, the degree of privacy protection increases and the amount of noise to add to the data increases. Meanwhile, as the value of privacy index increases, the degree of privacy protection decreases and the amount of noise to add to the data decreases.

The value of privacy index is determined to a predetermined value depending on the sensitivity of the data to handle. For example, in a case where noise is added to a pictogram used for character input in a smartphone and the like for anonymization, the privacy index is set to 4, and in a case where health care information such as the pulse is handled, the privacy index is set to 2, and the like. Note that these specific values of privacy index are merely examples, and the present technology is not limited to those values.

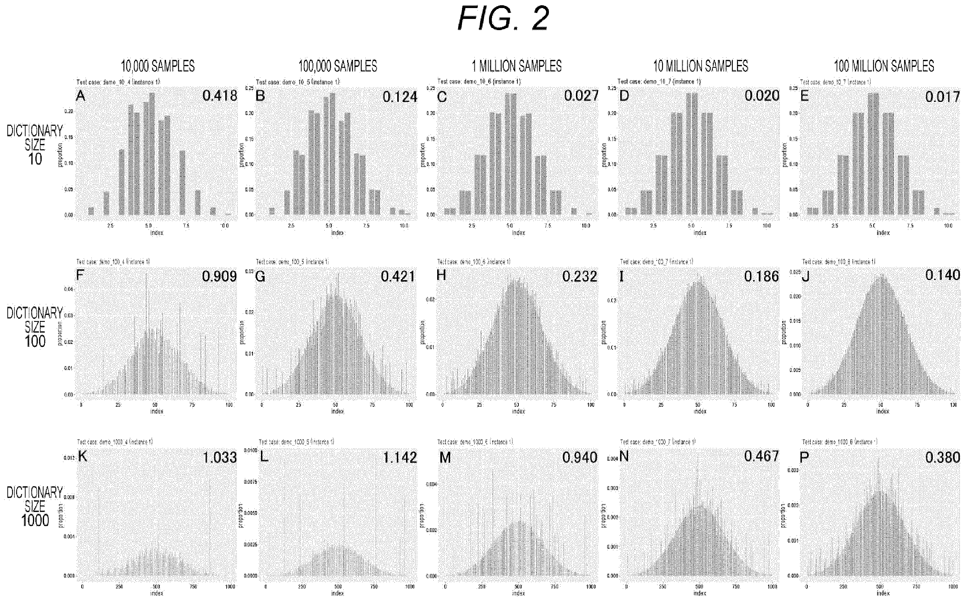

Fig. 2 is a group of graphs showing the relationship between the sample size, dictionary size, and error in a case where the privacy index has a predetermined value. The error is the difference between a measured value of data without nose added (hereafter referred to as correct answer value) and a measured value of data to which noise is added by differential privacy (referred to as measured value with noise). In the graphs of Fig. 2, out of two bar graphs lined up, the right side shows the measured value of data without noise added (correct answer value), and the left side shows the measured value of data with noise added by differential privacy (measured value with noise).

In Fig. 2, the dictionary size in the upper graphs A to E is 10, the dictionary size in the middle graphs F to J is 100, and the dictionary size in the lower graphs K to P is 1000.

The sample size of the vertically arranged graphs A, F, and K is 10,000. Furthermore, the sample size of the vertically arranged graphs B, G, and L is 100,000. Furthermore, the sample size of the vertically arranged graphs C, H, and M is one million. Furthermore, the sample size of the vertically arranged graphs D, I, and N is ten million. Moreover, the sample size of the vertically arranged graphs E, J, and P is 100 million. Note that the privacy index of all the graphs is the same.

The value shown in the upper right of each graph is the error between the correct answer value and the measured value with noise in the graph.

As can be seen in the graphs of Fig. 2, when comparing graphs with the same sample size, it can be seen that as the dictionary size decreases, the error decreases. Furthermore, when comparing graphs with the same dictionary size, it can be seen that as the sample size increases, the error decreases. In differential privacy, as the error between the correct answer value and the measured value with noise decreases, more reliable data can be acquired while data privacy is protected, which is preferable.

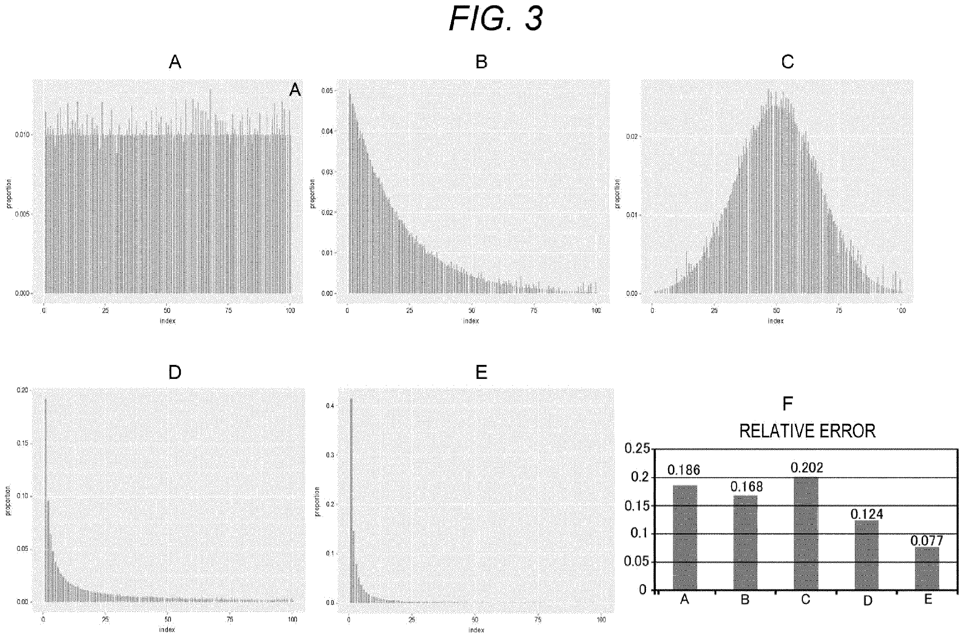

Figs. 3A to 3E are a group of graphs showing the relationship between the data distribution and the error between the correct answer value and the measurement value with noise, and Fig. 3F is a graph showing the relative error in each distribution. In each graph of Figs. 3A to 3E, the sample size is the same, the dictionary size is the same, and the privacy index is the same. As can be seen from Fig. 3F, even if the sample size, dictionary size, and privacy index are the same, the relative error differs depending on the data distribution.

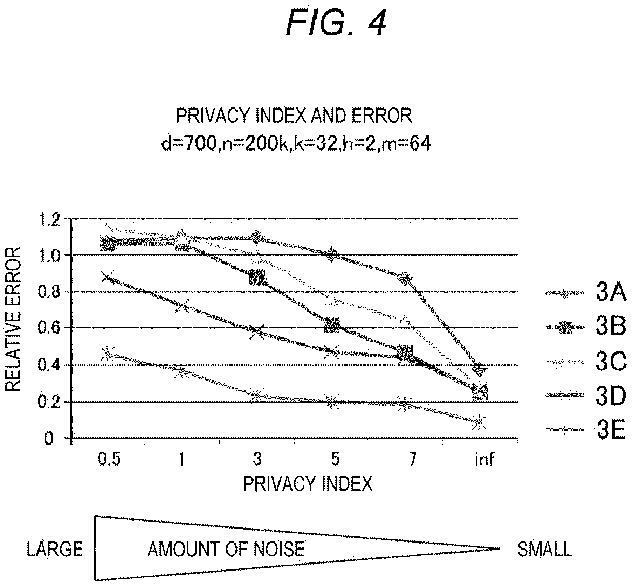

Fig. 4 is a graph showing the relationship between each type of data distribution shown in Figs. 3A to 3E and the value of privacy index. As can be seen from Fig. 4, even if the distribution is different, as the privacy index decreases, the amount of noise to add to the data increases, and the error also increases. Meanwhile, as the privacy index increases, the amount of noise to add to the data decreases, and the error also decrease

From such a relationship between the sample size, dictionary size, and privacy index, it can be seen that there are the following trade-off relationship between the sample size, dictionary size, and privacy index.

In a case where the dictionary size is constant and the privacy index is constant, the error increases as the sample size decreases.

Furthermore, in a case where the dictionary size is small, the error is small even if the sample size is small. Meanwhile, in a case where the dictionary size is large, the error is large even if the sample size is large.

Moreover, in a case where the sample size is constant and the dictionary size is constant, as the privacy index decreases, the error increases, and as the privacy index increases, the error decreases. Therefore, to increase the privacy strength and reliability, it is necessary to increase the sample size.

In local type differential privacy, the error, which is the difference between statistical results of the correct answer value and the measured value with noise, is used as an evaluation index. Therefore, the error of good local type differential privacy does not change even with the increased amount of noise and sensitivity in a case where the sample size is the same and the dictionary size is the same. Furthermore, the error of good local type differential privacy does not change even with the decreased sample size in a case where the dictionary size is the same and the privacy index is the same. This is because, in general, to increase the sample size, a large number of measured values (data) needs to be obtained, which is costly.

Note that when actually operating a system using differential privacy, the correct answer value without noise added cannot be obtained, and thus the error cannot be calculated. Therefore, in the present technology, reliability is defined as an index of effectiveness of differential privacy instead of error.

The variation in totalization results of the data multiple times is evaluated for each data type that constitutes the dictionary. To make a comparison between different data types, the coefficient of variation is used as reliability. The coefficient of variation is an index for relatively evaluating the relationship between the measured value (data) and the variation with respect to the average value, and can be obtained from Formula 1 below.

[Formula 1]

$$\text{Coefficient of variation} = \text{standard deviation}/\text{average}$$

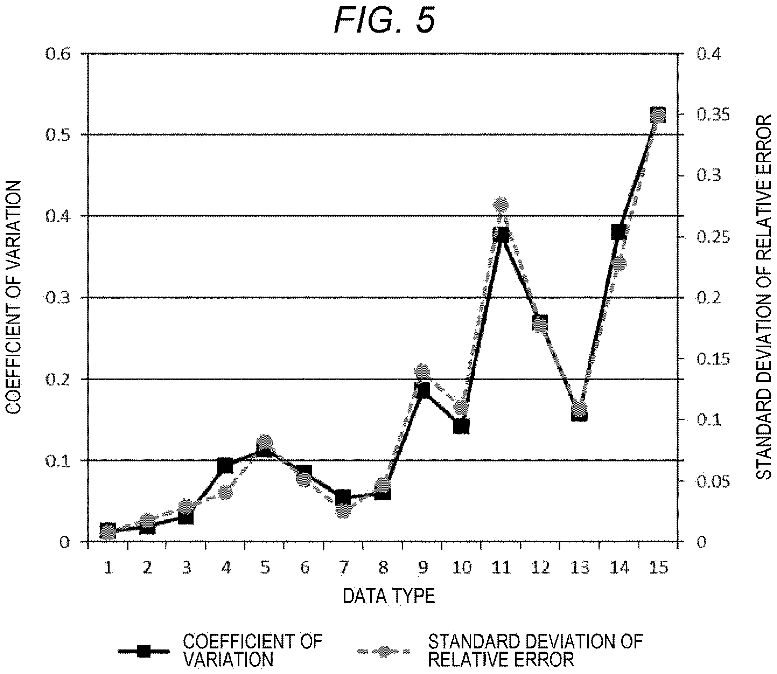

Fig. 5 is a graph showing the relationship between the coefficient of variation and the relative error with the coefficient of variation and the relative error of relative error plotted on the vertical axis, and the data type (serial number starting from 1) plotted on the horizontal axis. As shown in Fig. 5, the coefficient of variation calculated from the measured value with noise has a correlation with the relative error. Therefore, the coefficient of variation can be used as an index of effectiveness of differential privacy. Therefore, the coefficient of variation is used as reliability as an index of effectiveness of differential privacy. Since there are few errors with a low coefficient of variation, the reliability is high. Meanwhile, since there are many errors with a high coefficient of variation, the reliability is low.

To decrease the error between the result of applying differential privacy with a small sample size and the result of not applying differential privacy, the dictionary size needs to be small.

Furthermore, to decrease the error between the result of applying differential privacy with a small sample size and the result of not applying differential privacy, the data augmentation technology to increase data is used. It is possible to increase the amount of data by dividing the noise addition into the device and the cloud and performing the noise addition a plurality of times, but a simple method cannot make improvements below the error caused by the variation of noise added by the device.

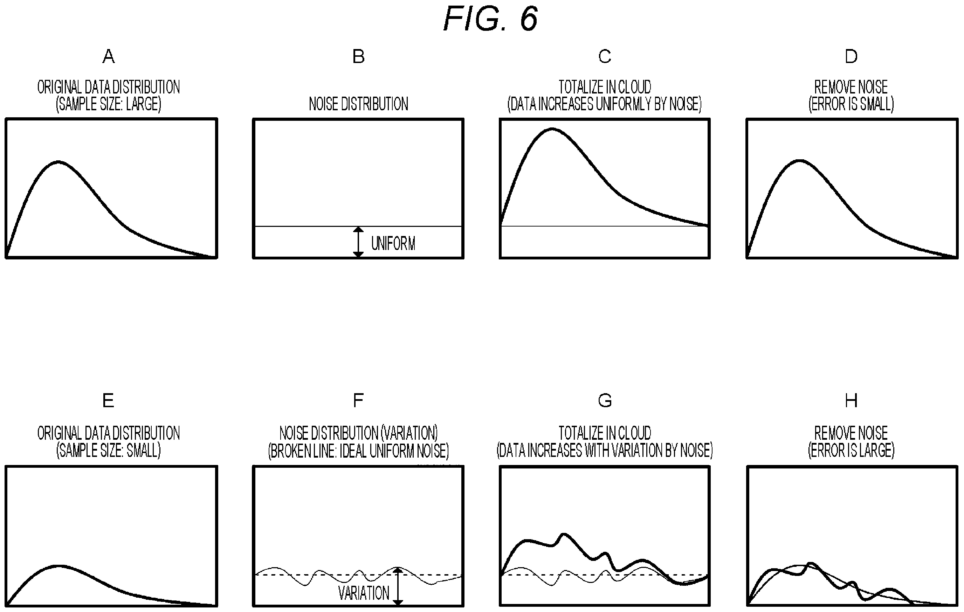

This point will be described with reference to Fig. 6. In all of Figs. 6A to 6H, the horizontal axis is the dictionary size and the vertical axis is the sample size. In a case where the sample size of original data is large as shown in Fig. 6A, noise having uniform distribution is added by differential privacy in the device as shown in Fig. 6B. Then, in a case where the data is totalized in the cloud, the data increases by the amount of uniform noise as shown in Fig. 6C. Then, as shown in Fig. 6D, in a case where the original data is obtained by removing the noise, since the noise is removed assuming that the noise is uniform, the error between the original data and the data with noise added by differential privacy is small.

Meanwhile, in a case where the sample size of original data is small as shown in Fig. 6E, noise that does not have uniform distribution and has variation is added by differential privacy in the device. Then, in a case where the data is totalized in the cloud, since the data is increased by the noise having uneven distribution as shown in Fig. 6G, the distribution of data also varies. However, since the noise is removed assuming that the noise is uniform in the cloud, the error between the data without noise and the data with noise added by differential privacy increases as shown in Fig. 6H. In a case where the sample size is small, such non-uniformly distributed noise causes the error.

Therefore, in the present technology, augmentation processing is performed to predict the variation in the noise distribution caused by the device in the cloud by using the data hierarchical structure, to correct the noise variation in the cloud, and to add noise and increase the data such that the noise distribution becomes uniform. Details of the data hierarchical structure and augmentation processing will be as described later.

<2. Embodiment>

[2-1. Configuration of data processing system 10]

Next, the configuration of a data processing system 10 using the above-described differential privacy will be described. In this embodiment, the present technology will be described with an example of using differential privacy in data collection using a regional mesh. This embodiment transmits positional information from terminal devices 100 to a server device 300, thereby collecting data indicating that the terminal device 100 exists in a specific regional mesh in the server device 300, and determining the distribution of the terminal devices 100, that is, the distribution of users who own the terminal devices 100.

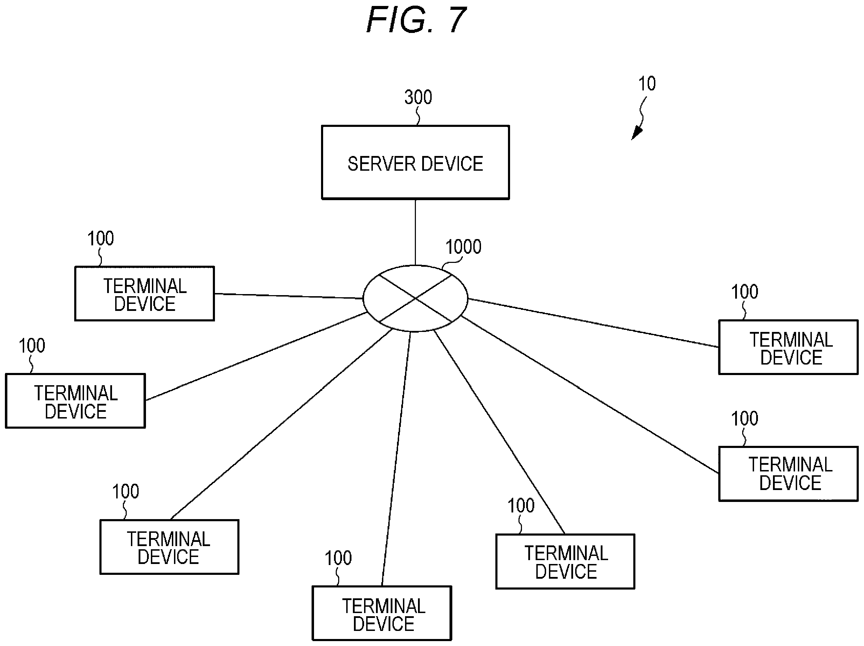

As shown in Fig. 7, the data processing system 10 includes the plurality of terminal devices 100 and the server device 300. The plurality of terminal devices 100 and the server device 300 are connected to each other via a network 1000 such as the Internet. Note that for convenience of description and drawings, seven terminal devices 100 are listed, but there may be seven or more terminal devices 100 connected to the server device 300.

The server device 300 is a device operated by, for example, a manufacturer that manufactures the terminal devices 100 and the like for collecting data from the terminal devices 100 and obtaining statistical results by using differential privacy. The server device 300 corresponds to the cloud in description of differential privacy described above.

The terminal device 100 is a smartphone and the like having at least a positional information acquisition function and a communication function. The terminal device 100 periodically or at a predetermined timing transmits a log including positional information of the terminal device 100 to the server device 300.

[2-2. Description of regional mesh]

Here, the regional mesh used for determining the distribution of users using the specific terminal devices 100 will be described. The regional mesh is a mesh that divides regions into meshes of approximately the same size on the basis of latitude/longitude for use in statistics. The code for identifying each of the meshes is the regional mesh code.

The regional mesh is classified into a primary mesh, secondary mesh, and tertiary mesh according to the size of the mesh. The primary mesh is a section of one sheet of the 1/200000 topographic map as one unit section. The latitude difference is 40 minutes, the longitude difference is 1 degree, and the length of one side is about 80 km. The secondary mesh is an area formed by dividing the secondary mesh into eight equal parts in the latitude and longitude directions, and corresponds to one section of one sheet of the 1/25000 topographic map. The latitude difference is 5 minutes, the longitude difference is 7 minutes and 30 seconds, and the length of one side is about 10 km. The tertiary mesh is an area formed by dividing the secondary mesh into 10 equal parts in the latitude and longitude directions. The latitude difference is 30 seconds, the longitude difference is 45 seconds, and the length of one side is about 1 km.

By collecting positional information from each of the large number of terminal devices 100, it is possible to determine the distribution of users of the terminal devices 100 in the entire area of Japan. The number of regional meshes is defined as the data type that constitutes the dictionary, and the number of data types is defined as the dictionary size.

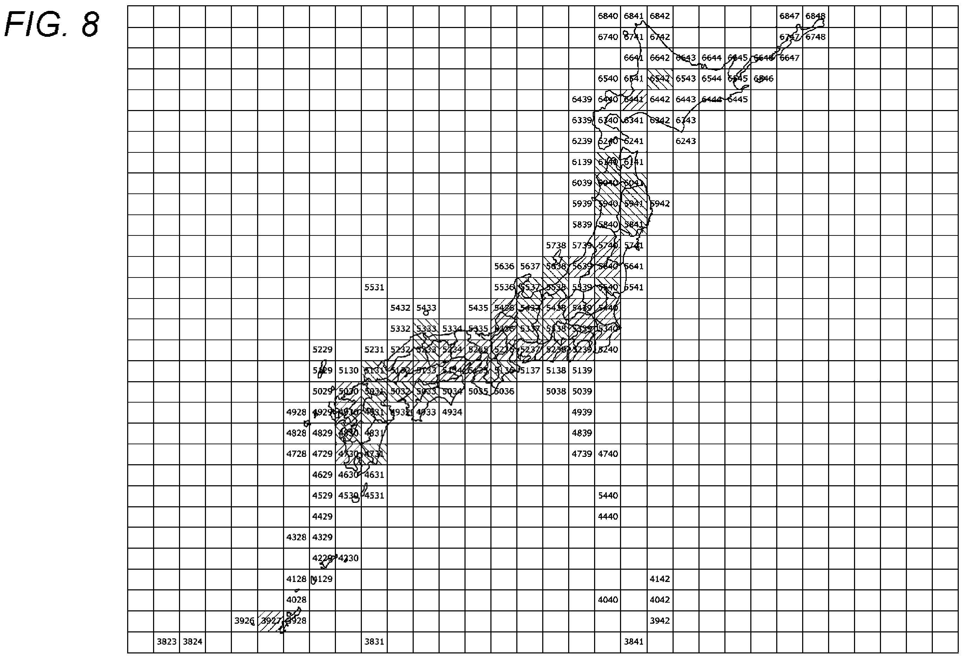

Fig. 8 is a diagram showing a state in which the entire area of Japan is covered using the primary mesh. Each of rectangles superimposed on the Japanese map is the primary mesh. Since the primary mesh can cover the entire area of Japan with 176 meshes, in a case where only the primary mesh is used, the number of data types constituting the dictionary is 176, and the dictionary size is 176. If the entire area of Japan is covered with the primary mesh, remote islands, depopulated regions, mountainous regions, and the like will be included in the meshes, which is wasteful.

Since the secondary mesh can cover the entire area of Japan with 4,862 meshes, in a case where only the secondary mesh is used, the number of data types constituting the dictionary is 4,862, and the dictionary size is 4,862. In a similar manner to the primary mesh, remote islands, depopulated regions, mountainous regions, and the like are included in the meshes of the secondary mesh, which is wasteful.

Since the tertiary mesh can cover the entire area of Japan with 387,286 meshes, in a case where only the tertiary mesh is used, the number of data types constituting the dictionary is 387,286, and the dictionary size is 387,286.

Furthermore, since specific values of the primary mesh, secondary mesh, and tertiary mesh vary depending on information about the mesh on the Internet to be referenced, the present technology is not limited in any way by the specific number of meshes described above.

[2-3. Configuration of terminal device 100 and noise-adding device 200]

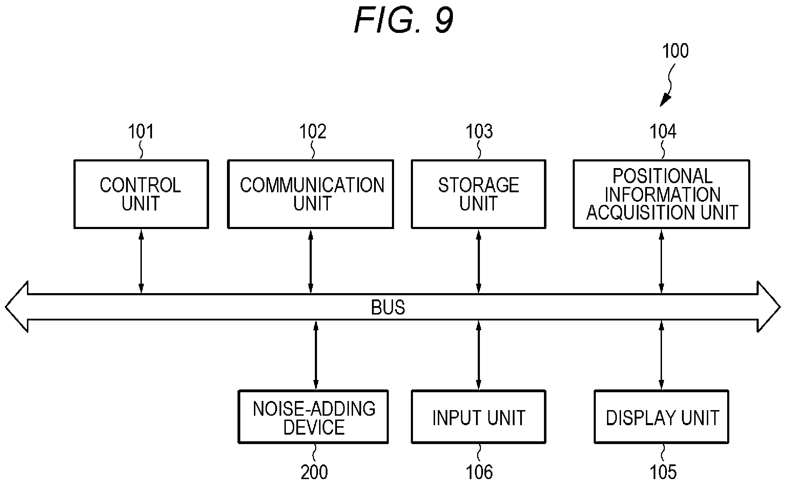

Next, the configuration of the terminal device 100 will be described with reference to Fig. 9. The terminal device 100 includes a control unit 101, a communication unit 102, a storage unit 103, a positional information acquisition unit 104, a display unit 105, an input unit 106, and a noise-adding device 200. The noise-adding device 200 corresponds to the external noise-adding device in the claims. Note that there are many terminal devices 100 connected to the server device 300, but for convenience of description and drawings, details of only one terminal device 100 is shown.

The control unit 101 includes a central processing unit (CPU), a random access memory (RAM), a read only memory (ROM), and the like. The ROM stores programs that are read and operated by the CPU, and the like. The RAM is used as a work memory for the CPU. The CPU controls the entire terminal device 100 by executing various processes according to the program stored in the ROM and issuing commands.

The communication unit 102 is a communication module to communicate with the server device 300 and the Internet according to the predetermined communication standard. The communication method includes wireless local area network (LAN) such as wireless fidelity (Wi-Fi), fourth generation mobile communication system (4G), fifth generation mobile communication system (5G), broadband, Bluetooth (registered trademark), and the like.

The storage unit 103 is, for example, a storage medium including a hard disc drive (HDD), a semiconductor memory, a solid state drive (SSD), and the like, and stores data such as applications and programs, in addition to content data such as image data, video data, audio data, and text data.

The positional information acquisition unit 104 is a global positioning system (GPS) module for obtaining positional information on the terminal device 100. In the present embodiment, the positional information indicating the current position of the terminal device 100 acquired by the positional information acquisition unit 104 is converted into lower-order data as original data. The lower-order data corresponds to the original data in the claims.

The display unit 105 is a display device for displaying content such as images and videos, a user interface, and the like. Examples of the display device include liquid crystal display (LCD), plasma display panel (PDP), organic electro luminescence (EL) panel, and the like.

The input unit 106 is various input devices for the user to input an instruction to the terminal device 100. The input unit 106 includes a button, a touch screen integrated with the display unit 105, and the like. If an input is made to the input unit 106, a control signal according to the input is generated and output to the control unit 101 and the noise-adding device 200.

The noise-adding device 200 is a processing device configured by the terminal device 100 executing a program. The program may be installed in the terminal device 100, or may be distributed by download, storage medium, and the like and installed by the user in person. Note that the noise-adding device 200 does not have to be implemented only by a program but may be implemented by combining a dedicated device, a circuit, and the like by hardware having the function.

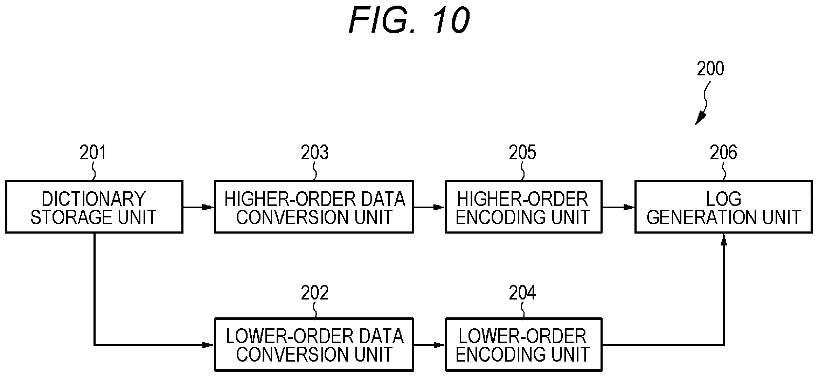

As shown in Fig. 10, the noise-adding device 200 includes a dictionary storage unit 201, a lower-order data conversion unit 202, a higher-order data conversion unit 203, a lower-order encoding unit 204, a higher-order encoding unit 205, and a log generation unit 206. The noise-adding device 200 is a device for adding noise by differential privacy to data to transmit to a data processing device 400 of the server device 300.

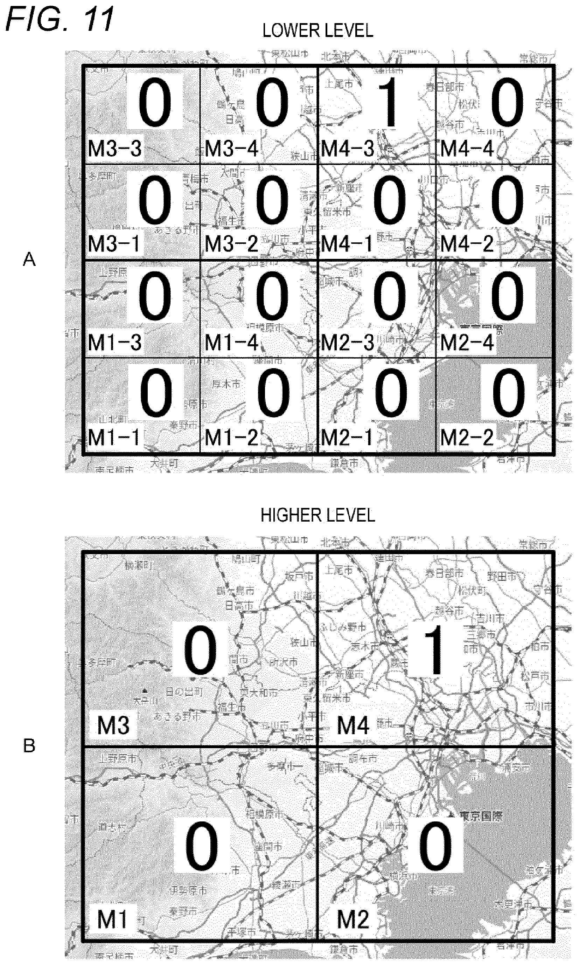

The dictionary storage unit 201 is a storage processing unit that causes the storage unit 103 to store the dictionary transmitted from the server device 300. The dictionary to store is a dictionary generated by a dictionary generation unit 401 of the data processing device 400. Therefore, the dictionary owned by the noise-adding device 200 and the data processing device 400 is common. In the present embodiment, the regional mesh corresponding to the lower-order data is the data type, and the dictionary is configured according to the data type. Therefore, as shown in Fig. 11, it can be said that the dictionary indicates the entire domain including a plurality of regional meshes (data types) in which data is collected. The regional mesh of the lower level in the entire domain in which data is collected is the dictionary size.

The lower-order data conversion unit 202 converts the positional information acquired by the positional information acquisition unit 104 into the lower-order data as the original data. As shown in Fig. 11A, the lower-order data is configured as a bit string in which 0 and 1 indicate where in the regional meshes in a predetermined domain the position indicated by the positional information exists. The level of the regional meshes that constitute the lower-order data is the lower level. This bit value is called a true value for distinction from noise.

A bit value of "1" is assigned to a regional mesh including the position indicated by the positional information, that is, the regional mesh in which the terminal device 100 exists. A bit value of "0" is assigned to a regional mesh in which the terminal device 100 does not exist. Therefore, the bit value "1" indicates that there is one user who is the owner of the terminal device 100 in the regional mesh.

The plurality of regional meshes in the predetermined domain determined in advance is the data type constituting the dictionary. Furthermore, the total number of data (log) transmission from the plurality of terminal devices 100 to the server device 300 from within the regional mesh within a predetermined time is a count value (sample size) for each regional mesh. The total number of transmission is totalized by the data processing device 400.

The higher-order data conversion unit 203 generates the higher-order data, which is the data of the higher level, from the lower-order data, which is the data of the lower level in the hierarchical structure of data.

The hierarchical structure of data includes the lower-order data of the lower level and the higher-order data of the higher level generated from the lower-order data. The lower-order data is the original data obtained by converting the positional information into the bit string data, and the higher-order data is the bit string data generated from the lower-order data. The present technology predicts the distribution of noise added by the noise-adding device 200 of the terminal device 100 by using the data hierarchical structure, and therefore cannot predict the noise distribution with only the lower-order data, which is the original data. Therefore, to form the data hierarchical structure, it is necessary to generate the higher-order data from the lower-order data.

In the present embodiment, as shown in Fig. 11A, to begin with, the regional mesh of a particular size (for example, tertiary mesh) is the lower level. Then, the higher regional mesh including the regional mesh of the lower level and having a larger mesh size than the regional mesh of the lower level (primary mesh or secondary mesh) is the higher level. Note that the secondary mesh may be the lower level and the primary mesh may be the higher level.

The four meshes M1, M2, M3, and M4 shown in Fig. 11B are the higher level corresponding to the higher-order data. Furthermore, the 16 meshes shown in Fig. 11A are the lower level corresponding to the lower-order data.

M1-1, M1-2, M1-3, and M1-4 are meshes of the lower level included in the mesh M1 of the higher level. Furthermore, M2-1, M2-2, M2-3, and M2-4 are meshes of the lower level included in the mesh M2 of the higher level. Furthermore, M3-1, M3-2, M3-3, and M3-4 are meshes of the lower level included in the mesh M3 of the higher level. Moreover, M4-1, M4-2, M4-3, and M4-4 are meshes of the lower level included in the mesh M4 of the higher level.

In the plurality of regional meshes of the lower level, the bit value "1" is set by the lower-order data conversion unit 202 in the regional mesh including the position indicated by the positional information. Furthermore, the bit value "0" is set by the lower-order data conversion unit 202 in the regional mesh that does not include the position indicated by the positional information. In this way, the positional information is converted into the bit string as the lower-order data.

Then, the higher-order data conversion unit 203 generates the bit string that is the higher-order data by reflecting the bit value of each regional mesh of the lower level in the regional mesh of the higher level including the regional mesh of the lower level.

For example, in a case where the regional mesh M4-3 of the lower level includes the position indicated by the positional information as shown in Fig. 11A, the bit value "1" is set in the regional mesh M4-3. Then, this means that the regional mesh M4 of the higher level also includes the position indicated by the positional information. Therefore, as shown in Fig. 11B, the bit value "1" is also set in the regional mesh M4 of the higher level.

As shown in Fig. 11A, in a case where the regional meshes M3-1, M3-2, M3-3, and M3-4 of the lower level do not include the position indicated by the positional information, the bit value "0" is set in these four regional meshes. Then, as shown in Fig. 11B, this means that the regional mesh M3 of the higher level also does not include the position indicated by the positional information, and the bit value "0" is also set in the regional mesh M3 of the higher level. This is also similar in the regional meshes M1 and M2 of the higher level. In this way, the higher-order data of the higher level can be generated from the lower-order data of the lower level.

The process returns to the description of the noise-adding device 200. The lower-order encoding unit 204 performs encoding processing and noise-adding processing on the bit string that is the lower-order data to be transmitted to the server device 300 to generate the lower-order noise-added data. The amount of noise to add is determined according to the privacy index and the probability distribution. Therefore, it is unknown what distribution of noise will be added until the noise is added.

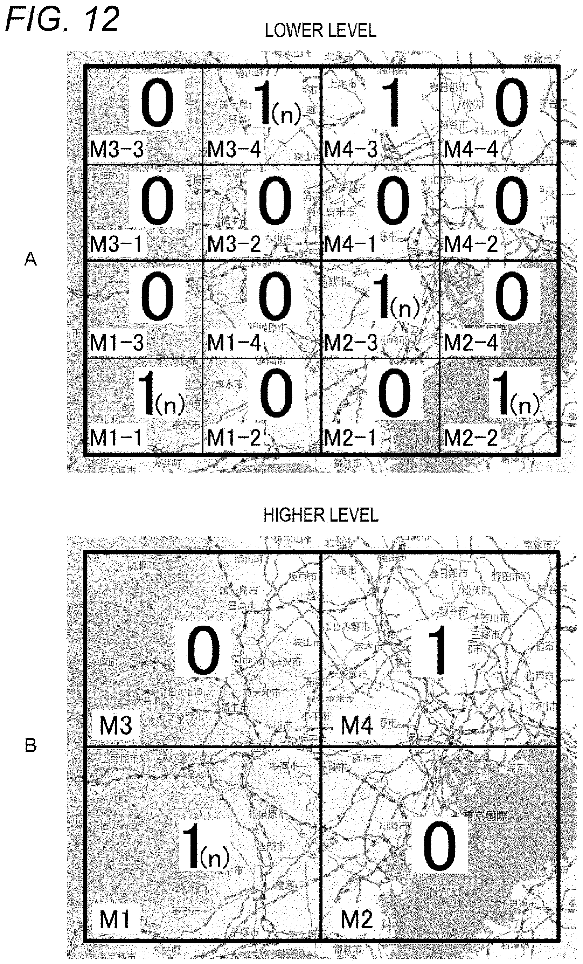

For example, if noise is added to the lower-order data shown in Fig. 11A, the result is shown in Fig. 12A. The bit value "1" indicating that the position indicated by the positional information exists within the regional mesh is added as noise in the plurality of regional meshes. As a result, the number of bit values "1" increases. To distinguish between the true value and noise in Fig. 12A, (n) is added to the bit value "1" that is noise.

The higher-order encoding unit 205 performs encoding processing and noise-adding processing on the bit string that is the higher-order data to be transmitted to the server device 300 to generate the higher-order noise-added data. The amount of noise to add is determined according to the privacy index and the probability distribution. Therefore, it is unknown what distribution of noise will be added until the noise is added.

For example, if noise is added to the higher-order data shown in Fig. 11B, the result is shown in Fig. 12B. The bit value "1" indicating that the position indicated by the positional information exists within the regional mesh is added as noise in the regional mesh. As a result, the number of bit values "1" increases. To distinguish between the true value and noise in Fig. 12B, (n) is added to the bit value "1" that is noise and to the noise. Note that since noise is added to the lower-order data and the higher-order data by different processing, noise is not always added to the regional mesh of the higher level including the regional mesh of the lower level in which noise is added to the lower-order data.

The number of all regional meshes corresponding to the lower-order data, which is the original data, corresponds to the dictionary size.

The log generation unit 206 generates a log to be transmitted to the server device 300, the log including the higher-order noise-added data and the lower-order noise-added data. The log includes a time stamp as header information, upper privacy index and lower privacy index, which are parameter information for differential privacy, higher-order bit depth, lower-order bit depth, identification information (ID) on the terminal device 100, and the like. The generated log is transmitted to the server device 300 via the network 1000 by communication by the communication unit 102. Note that unchanging information such as privacy index and identification information does not need to be included in the log if shared by the terminal device 100 and the server device 300 in advance.

The terminal device 100 and the noise-adding device 200 are configured as described above.

[2-4. Configuration of server device 300 and data processing device 400]

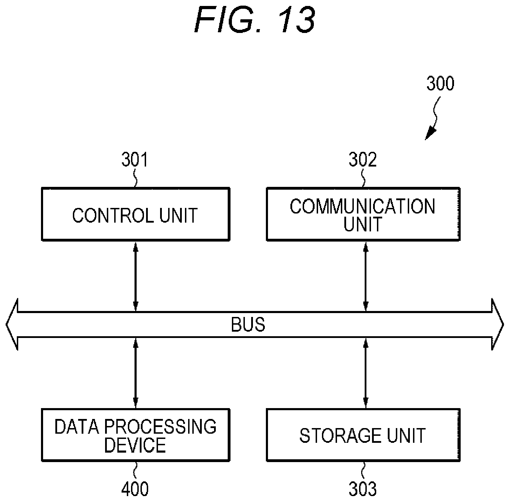

Next, the configuration of the server device 300 will be described with reference to Fig. 13. The server device 300 includes a control unit 301, a communication unit 302, a storage unit 303, and the data processing device 400.

The control unit 301 includes a CPU, RAM, ROM, and the like. The CPU controls the entire server device 300 by executing various processes according to a program stored in the ROM and issuing commands.

The communication unit 302 is a communication module to communicate with the terminal device 100 and the Internet according to the predetermined communication standard. The communication method includes wireless LAN such as Wi-Fi, 4G, 5G, broadband, Bluetooth (registered trademark), and the like.

The storage unit 303 is, for example, a storage medium including an HDD, a semiconductor memory, an SSD, and the like, and stores an application, a program, a log transmitted from the terminal device 100, data, and the like.

The data processing device 400 is a processing unit configured by the server device 300 executing a program. The program may be installed in the server device 300, or may be distributed by download, storage medium, and the like and installed by the user in person. Note that the data processing device 400 does not have to be implemented only by a program but may be implemented by combining a dedicated device, a circuit, and the like by hardware having the function.

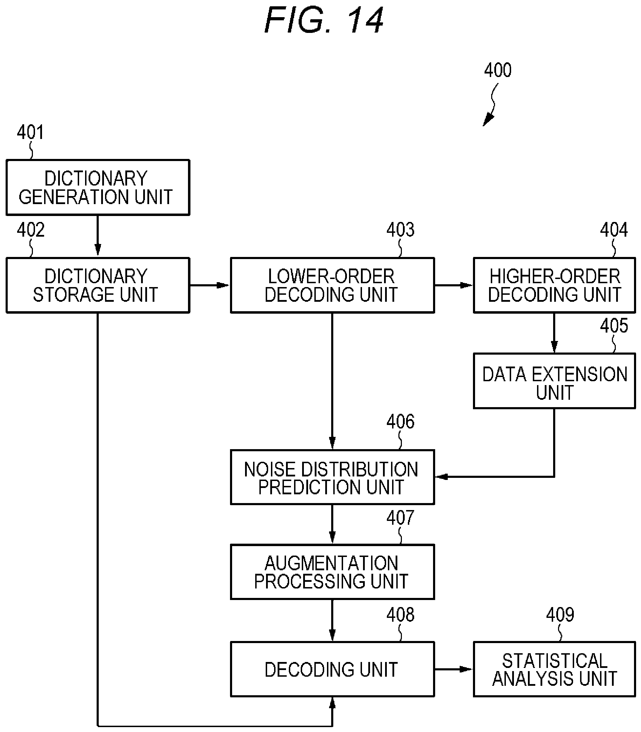

As shown in Fig. 14, the data processing device 400 includes a dictionary generation unit 401, a dictionary storage unit 402, a lower-order decoding unit 403, a higher-order decoding unit 404, a data extension unit 405, a noise distribution prediction unit 406, an augmentation processing unit 407, a decoding unit 408, and a statistical analysis unit 409.

The dictionary generation unit 401 generates the dictionary as a data set. In the present embodiment, the regional mesh corresponding to the lower-order data is the data type, and the dictionary is configured according to the data type. Therefore, as shown in Fig. 11, it can be said that the dictionary indicates the entire domain including a plurality of regional meshes (data types) in which data is collected. The regional mesh of the lower level in the entire domain in which data is collected is the dictionary size.

The dictionary data generated by the dictionary generation unit 401 is stored by the dictionary storage unit 402 in the storage unit 303, and is transmitted to the terminal device 100 and is also stored by the dictionary storage unit 201 in the terminal device 100.

The dictionary storage unit 402 is a storage processing unit that stores the dictionary generated by the dictionary generation unit 401 in the storage unit 303.

The lower-order decoding unit 403 aggregates the lower-order noise-added data from a plurality of logs received by the server device 300, and performs decoding processing and noise removal processing on the lower-order noise-added data to obtain the lower-order data. The lower-order decoding unit 403 corresponds to the noise removal unit in the claims.

The higher-order decoding unit 404 aggregates the higher-order noise-added data from the plurality of logs received by the server device 300, and performs decoding processing and noise removal processing on the lower-order noise-added data to obtain the higher-order data. The lower-order data from which noise is removed is supplied to the noise distribution prediction unit 406.

The data extension unit 405 is supplied with the higher-order noise-added data. The data extension unit 405 performs processing for extending the higher-order data according to the bit length of the lower-order data for the noise distribution prediction processing by the noise distribution prediction unit 406. The higher-order noise-added data that has undergone the extension processing is supplied to the noise distribution prediction unit 406.

The noise distribution prediction unit 406 is supplied with the extended higher-order noise-added data and the lower-order noise-added data. The noise distribution prediction unit 406 predicts the noise distribution in the lower-order noise-added data by using the higher-order noise-added data and the lower-order noise-added data. The noise distribution prediction result is supplied to the augmentation processing unit 407. Since the data processing device 400 receives the data to which noise is already added by the noise-adding device 200, it is necessary to predict the noise distribution in order to determine what kind of noise is added by the noise-adding device 200.

The augmentation processing unit 407 further adds noise to the lower-order noise-added data such that the noise distribution becomes more uniform on the basis of the predicted noise distribution to generate the augmented data. By adding noise in this augmentation processing, the amount of data can be increased and the sample size can be increased.

The decoding unit 408 aggregates the plurality of augmented data generated by applying augmentation processing to the data transmitted from each of the plurality of terminal devices 100, performs noise removal processing on the plurality of augmented data, and generates a plurality of the original data (lower-order data). The decoding unit 408 corresponds to the noise removal unit in the claims.

Since the lower-order data is data without noise added, it is possible to obtain the count value (sample size) for each data type (regional mesh of the lower level) in the domain (dictionary) in which data is collected on the basis of the lower-order data aggregated from the logs transmitted from the plurality of terminal devices 100. The count value is the number of times the positional information is transmitted to the server device 300 in the regional mesh for each regional mesh of the lower level. This makes it possible to determine where and how many users who own the terminal device 100 exist in the domain in which data is collected (dictionary) as a statistical result.

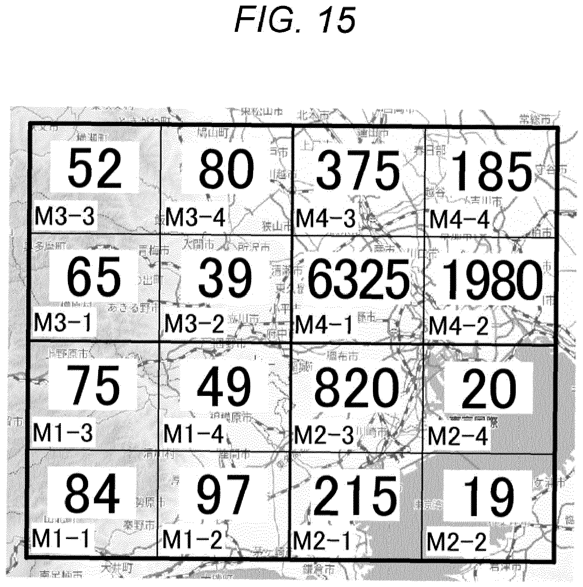

The count value is, for example, as shown in Fig. 15, the number of times the positional information is transmitted from within the regional mesh for each regional mesh of the lower level within a predetermined time. The number of transmissions of the positional information is the sample size, and the number of transmissions in each regional mesh is the sample size for each data type. This is not the number of transmissions from one terminal device 100, but is the total number of transmissions from all the terminal devices 100 that are connected to the server device 300 and transmit data to the server device 300.

Furthermore, the count value can also be obtained from the plurality of augmented data. The count value obtained from the augmented data will be described later.

The statistical analysis unit 409 creates a heat map to visualize statistical analysis results, reliability, and the like. Note that the statistical analysis unit 409 is not a required configuration in the present technology.

The server device 300 and the data processing device 400 are configured as described above.

[2-5. Processing in noise-adding device 200]

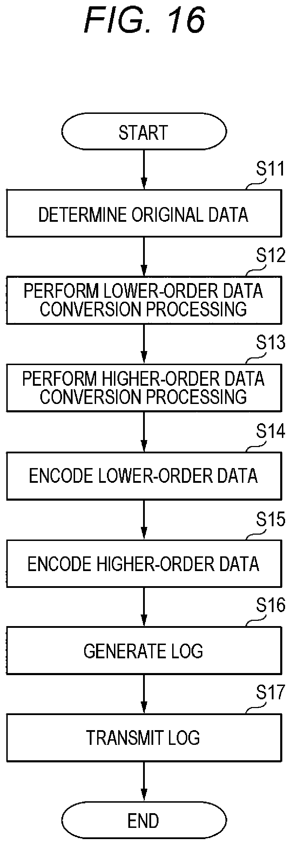

Next, the processing in the noise-adding device 200 will be described with reference to the flowchart of Fig. 16. To begin with, in step S11, data to be transmitted to the data processing device 400 is determined. This transmission data is the positional information on the terminal device 100 acquired by the positional information acquisition unit 104 of the terminal device 100. The timing of data transmission by data determination may be determined by the user of the terminal device 100, or may be automatically determined by predetermined algorithm and the like.

Next, in step S12, the lower-order data conversion unit 202 generates the lower-order data, which is the original data, from the transmission data. The lower-order data is configured as a bit string including bit values set in each regional mesh as described above, and 0 and 1 indicate from where in the regional mesh within a predetermined range determined in advance the positional information is transmitted.

Next, in step S13, the higher-order data conversion unit 203 generates the higher-order data from the lower-order data. As described above, the higher-order data is configured as a bit string including bit values set in each regional mesh, and 0 and 1 indicate where in the regional mesh within a predetermined range determined in advance the terminal device 100 of the user exists. The higher-order data reflects the bit value of the lower level in the regional mesh of the higher level including the regional mesh of the lower level, the regional mesh of the higher level including the higher regional mesh having the mesh size larger than that of the regional mesh of the lower level.

The present technology predicts the noise distribution added by the data processing device 400 of the terminal device 100 by using the hierarchical structure of the data. Therefore, to construct the hierarchical structure of the data, it is necessary to set the original data to the lower-order data and generate the higher-order data from the lower-order data.

Next, in step S14, the lower-order encoding unit 204 performs encoding processing and noise-adding processing on the lower-order data to generate the lower-order noise-added data. Furthermore, in step S15, the higher-order encoding unit 205 performs encoding processing and noise-adding processing on the higher-order data to generate the higher-order noise-added data. Note that step S12 and step S13, and step S14 and step S15 are described in order for convenience of description, but may be performed in parallel at the same time.

Next, in step S16, the log generation unit 206 generates the log including the higher-order noise-added data and the lower-order noise-added data to be transmitted to the data processing device 400.

Then, in step S17, the log is transmitted to the server device 300 via the communication unit 102 of the terminal device 100. Note that when the log is transmitted to the server device 300, header information unique to the terminal device 100 required for transmission is added to the log.

The terminal device 100 performs this processing regularly or at predetermined timing.

[2-6. Processing in data processing device 400]

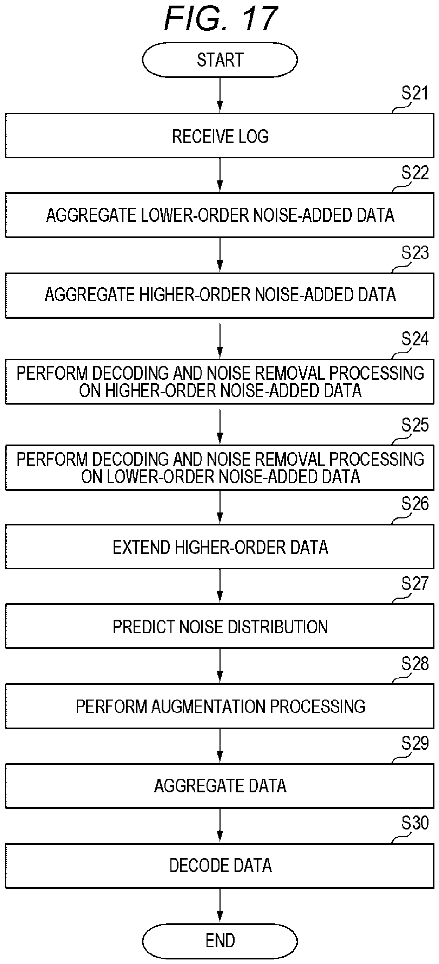

Next, the processing in the data processing device 400 will be described with reference to the flowchart of Fig. 17. To begin with, in step S21, the log transmitted from all the terminal devices 100 connected to the server device 300 are received.

Next, in step S22, the lower-order decoding unit 403 extracts and aggregates the lower-order noise-added data from the log. Furthermore, in step S23, the higher-order decoding unit 404 extracts and aggregates the higher-order noise-added data from the log.

Next, in step S24, the lower-order decoding unit 403 performs decoding processing and noise removal processing on the lower-order noise-added data to obtain the lower-order data. Furthermore, in step S25, the higher-order decoding unit 404 performs decoding processing and noise removal processing on the higher-order noise-added data to obtain the higher-order data.

Next, in step S26, the data extension unit 405 extends the higher-order data to match the bit length of the lower-order data.

Next, in step S27, the noise distribution prediction unit 406 predicts the noise distribution added by the device from the higher-order data and the lower-order data.

Here, the data extension in step 26 and noise distribution prediction in step S27 will be described with reference to the lower-order noise-added data and higher-order noise-added data shown in Fig. 12. The noise distribution prediction is performed using the hierarchical structure of the data, the higher-order noise-added data and the lower-order noise-added data.

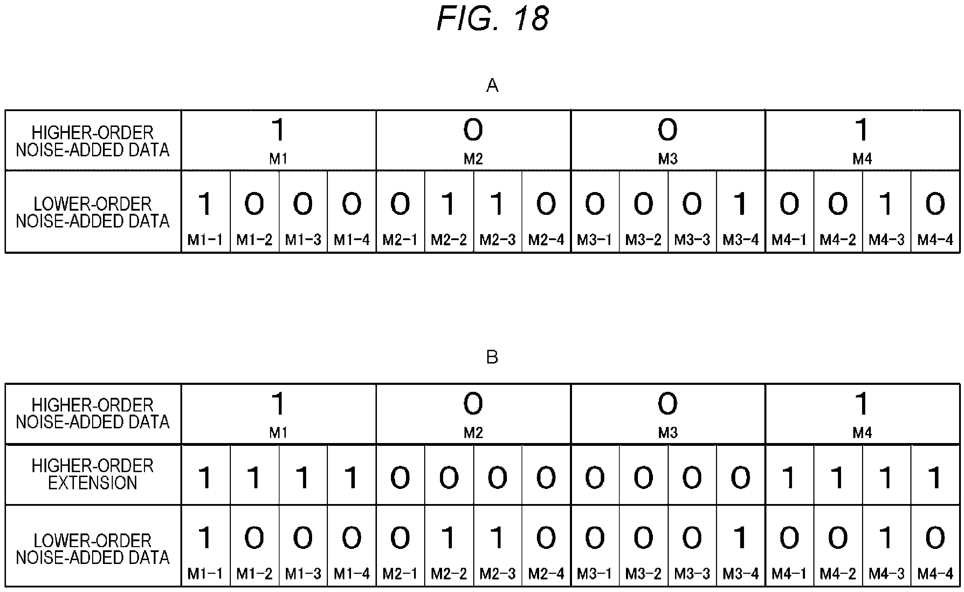

Fig. 18A is a table of correspondence of the bit string between the lower-order noise-added data and the higher-order noise-added data shown in Fig. 12. Then, if the bit string of the higher-order noise-added data is extended by the data extension unit 405 to match the bit length of the lower-order noise-added data, Fig. 18B is obtained. The extension is to match the bit value that is the same as the bit value of the higher-order noise-added data to the number of digits of the bit string of the lower-order noise-added data, as shown in Fig. 18B.

In a case where a bit is set in both one regional mesh of the lower level and the regional mesh of the higher level including the one regional mesh, it is determined that the bit value is likely to be a true value. Meanwhile, in a case where a bit is set in only one regional mesh of the lower level and the regional mesh of the higher level including the one regional mesh, it is determined that the bit value is likely to be noise.

For example, since the bit value of the regional mesh M4-3 of the lower level is 1 and the bit value of the regional mesh M4 of the upper level including the regional mesh M4-3 is also 1, it can be predicted that the bit value of M4-3 has a high probability of being a true value. This is also similar in the regional mesh M1-1 of the lower level and the regional mesh M1 of the higher level.

Meanwhile, the bit value of the regional mesh M2-2 of the lower level is 1 and the bit value of the regional mesh M2 of the upper level including the regional mesh M2-2 is 0. In this way, it can be predicted that the bit value of the regional mesh M2-2 of the lower level in which the bit value of the higher level does not agree with the bit value of the lower level is unlikely to be a true value (probability of noise is high). This is similar in the regional mesh M2-3 of the lower level and the regional mesh M2 of the higher level, and is similar in the regional mesh M3-4 of the lower level and the regional mesh M3 of the higher level.

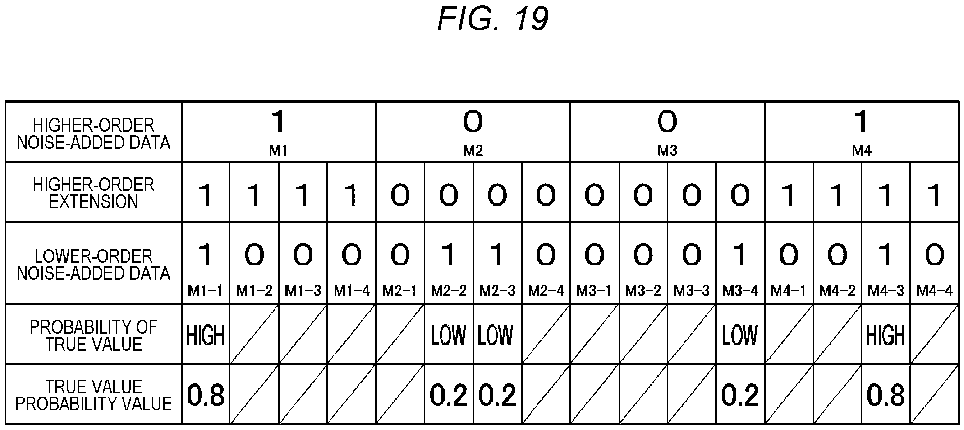

In this way, in all the regional meshes to which the bit value 1 is attached in the lower level, it is confirmed whether the probability that the bit value is a true value is high or low. The bit value having high probability of being a true value is multiplied by a true value probability value indicating that the probability of being a true value is high. Meanwhile, the bit value having low probability of being a true value is multiplied by a true value probability value indicating that the probability of being a true value is low. Then, the probability value that the bit value 1 of the lower-order noise-added data is a true value is shown in Fig. 19.

The probability value of being a true value takes a value from 0 to 1.0, in a case of 1.0, the probability of being a true value is 100%, and in a case of 0, the probability of being a true value is 0%. For example, the true value probability value indicating that the probability of being a true value is high is 0.8, and the true value probability value indicating that the probability of being a true value is low is 0.2. The true value probability value indicating that the probability of being a true value is high is set to 0.8 instead of 1.0 because in a case where the bit values of the higher level and the lower level are both 1, distinctions are not made whether the bit values are a true value or noise. Note that this true value probability value is just one example, and the present technology is not limited to this value.

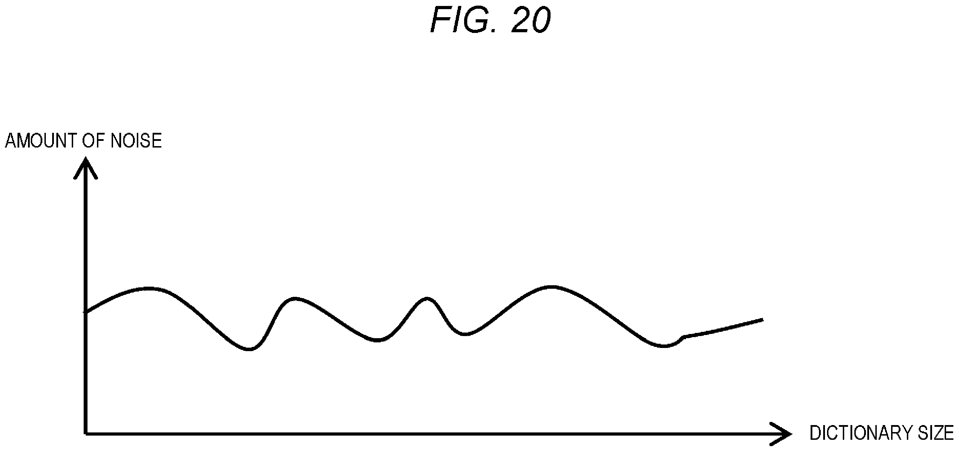

In this way, it is possible to obtain the probability that the bit string that is the lower-order noise-added data is a true value or noise. Then, on the basis of this true value probability, it is possible to obtain noise distribution prediction for the dictionary shown in Fig. 20. Fig. 20 is a graph showing the noise distribution prediction result for each data type that constitutes the dictionary with the dictionary size plotted on the horizontal axis and the amount of noise plotted on the vertical axis.

The process returns to the description of the flowchart of Fig. 17. Next, in step S28, the augmentation processing unit 407 performs augmentation processing on the lower-order noise-added data on the basis of the calculated noise distribution prediction, and further adds noise to the lower-order noise-added data such that the noise distribution becomes uniform.

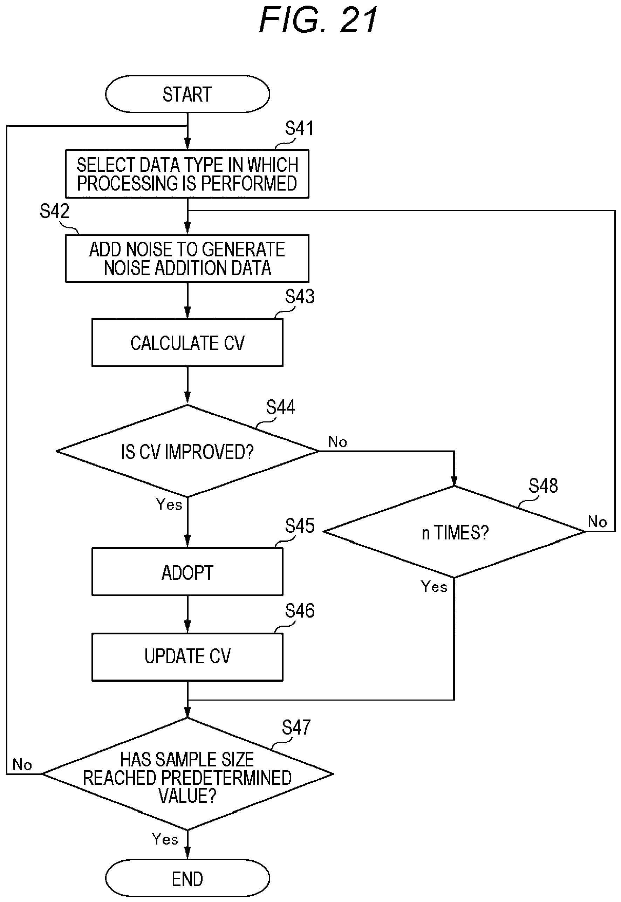

Here, the augmentation processing will be described with reference to the flowchart of Fig. 21.

To begin with, in step S41, one regional mesh (data type) on which the augmentation processing is performed is selected from the dictionary.

Next, in step S42, noise is further added in the selected regional mesh, and noise addition data is generated. Next, in step S43, the coefficient of variation (CV) is calculated for the noise addition data.

Next, in step S44, the coefficient of variation calculated in step S43 is compared with the coefficient of variation calculated in the previous processing for the same regional mesh as the regional mesh in which the coefficient of variation is calculated to determine whether or not the coefficient of variation has improved. Here, "the coefficient of variation has improved" means that the value of the coefficient of variation has decreased. The coefficient of variation having decreased means that the noise variation has decreased. Therefore, in order to eliminate the variation in noise and make the noise uniform by further adding noise to the noise-added data, it is preferable that the coefficient of variation be small.

Note that in a case where the coefficient of variation calculated in step S43 is the first coefficient of variation, a comparison may be made with the default coefficient of variation set in advance, or the process may proceed to step S45 without performing the comparison processing.

In a case where the coefficient of variation has improved, the process proceeds to step S45 (Yes in step S44). Next, in step S45, the noise addition data generated by adding noise in step S42 is adopted as the augmented data.

Then, in step S46, the coefficient of variation calculated in step S42 is updated as the coefficient of variation to be compared with the new coefficient of variation in the next processing.

Then, in step S47, it is determined whether or not the sample size has reached a predetermined number. In a case where the sample size has reached the predetermined number, the process ends as the augmentation processing has succeeded (Yes in step S47).

Meanwhile, in a case where the sample size has not reached the predetermined number, the process proceeds to step S41, and steps S41 to S47 are repeated (No in step S47).

The description returns to step S44. In step S44, the coefficient of variation calculated in step S43 is compared with the coefficient of variation calculated in the previous processing. In a case where the coefficient of variation has deteriorated (has not improved), the process proceeds to step S48 (No in step S44). Here, the coefficient of variation having deteriorated means that the value of the coefficient of variation has increased. The coefficient of variation having increased means that the noise variation has increased

Next, in step S48, it is determined whether or not the number of times it is determined that the coefficient of variation has deteriorated for one coefficient of variation has reached a predetermined number. In a case where the number of times it is determined that the coefficient of variation has deteriorated has not reached the predetermined number, the process proceeds to step S42 (No in step S48).

Then, in step S42, noise is newly added to the data selected in step S41, and the coefficient of variation is calculated for the noise-added data to which noise is newly added in step S43. Then, in a case where the coefficient of variation is better than the coefficient of variation of the previous processing, the process proceeds to step S45 (Yes in step S44), and in a case where the coefficient of variation has deteriorated, the process proceeds to step S48 (No in step S44).

In a case where the coefficient of variation has deteriorated, steps S42 to S45 and step S48 are repeated until the number of times it is determined that the coefficient of variation has deteriorated reaches the predetermined number.

In a case where the number of times it is determined that the coefficient of variation has deteriorated has reached the predetermined number in step S48, the process proceeds to step S47 (Yes in step S48). In this case, the process proceeds to step S47, and in a case where the sample size has not reached the predetermined value, processing is performed on another dictionary.

The augmentation processing is performed as described above. By the augmentation processing, additional noise is added only to the regional mesh (data type) where the coefficient of variation improves. Therefore, it is possible to make the noise distribution uniform by adding noise only to the regional mesh in which it is needed to increase data with noise.

The process returns to the description of the flowchart of Fig. 17. Next, in step S29, the decoding unit 410 aggregates the augmented data generated from the log received from the plurality of terminal devices 100 and supplies the augmented data to the decoding unit 408.

Next, in step S30, the decoding unit 408 performs decoding processing and noise removal processing on the augmented data, and acquires the number of times data is transmitted as the count value (sample size) in each regional mesh (data type) that constitutes the dictionary.

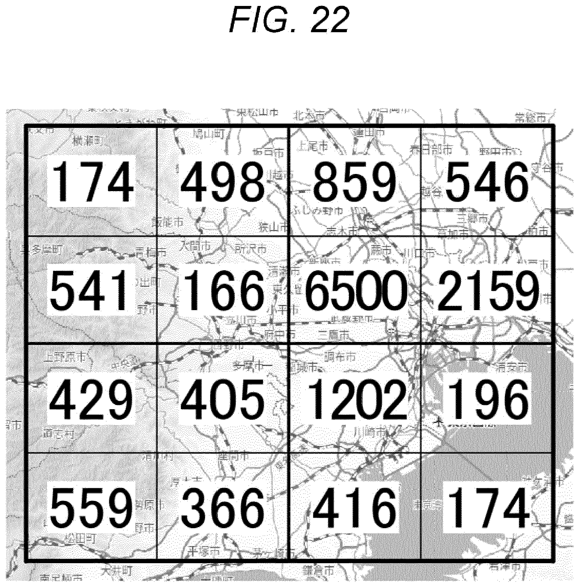

By the augmentation processing, for example, in a case where the data in the regional mesh of the lower level is as shown in Fig. 15, noise is added such that the noise distribution is uniform as shown in Fig. 22 by noise addition in the noise-adding device 200 and augmentation in the data processing device 400. In Fig. 22, the noise distribution is uniform, and noise of an average 300 is further added to the lower-order noise-added data of Fig. 15.

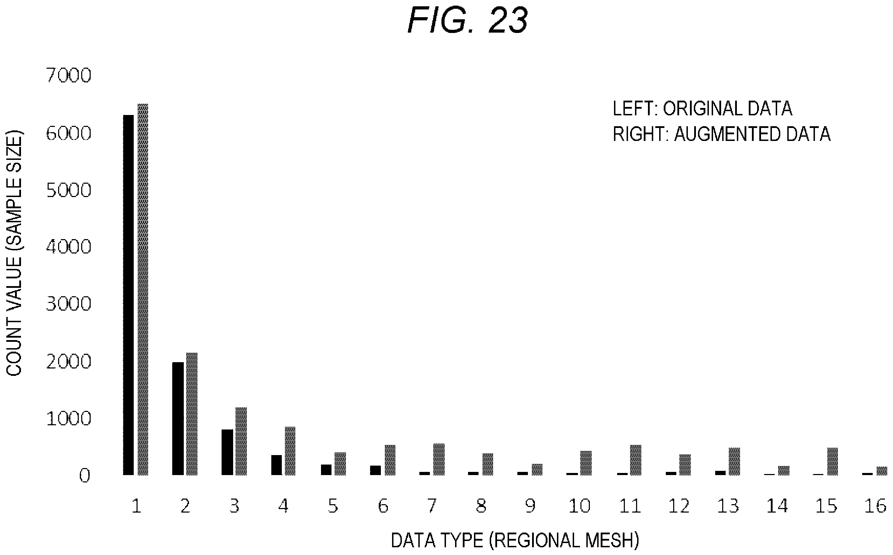

As shown in the graph of Fig. 23, in the noise addition data generated by adding noise by the augmentation processing, it is possible to obtain the count value (sample size) larger than the original data by the added noise.

Then, by uniformly subtracting the noise of 300 from all the data types (regional mesh) that constitute the dictionary, the correct statistics can be obtained by returning to the state of the original data.

The processing is performed by the present technology as described above. Even in a case where the noise added as differential privacy is not uniformly distributed due to the small sample size and varies, the present technology can predict the variation of noise and add the noise such that the distribution becomes uniform. By the noise addition, the amount of data (sample size) can be increased in a pseudo manner. By differential privacy, in a case where the dictionary size is the same, the error decreases as the sample size increases. Therefore, by adding noise and increasing the amount of data (increasing the sample size), the error in statistical results can be decreased even with a small amount of data, and the precision of differential privacy can be improved.

Furthermore, in the present technology, instead of adding noise to data once, noise is added once on the device side (noise-adding device 200), and noise is further added on the cloud side (data processing device 400) so as to correct the variation in the added noise. Therefore, it is possible to finally generate the noise-added data with less variation in noise distribution, and to increase data with noise with little error before and after the noise is added.

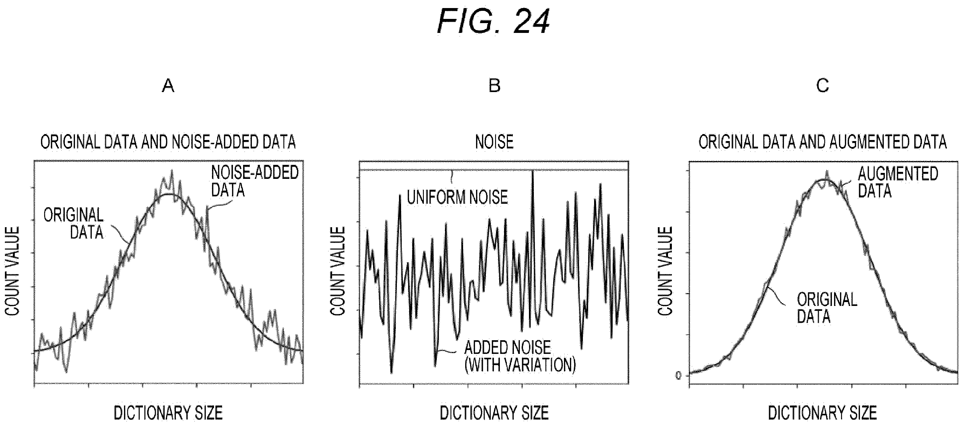

Fig. 24 is an explanatory diagram showing that the error is decreased by the augmentation processing. Fig. 24A is a diagram showing a comparison between the original data and the noise-added data with the dictionary size plotted on the horizontal axis and the count value plotted on the vertical axis. Fig. 24B is a diagram showing the distribution of noise added by the noise-adding device 200 and ideal uniform noise distribution with the dictionary size plotted on the horizontal axis and the amount of noise plotted on the vertical axis. Fig. 24C is a diagram showing a comparison between the original data and the augmented data with the dictionary size plotted on the horizontal axis and the count value plotted on the vertical axis.

As shown in Fig. 24B, since the distribution of noise added by the noise-adding device 200 is not uniform, a large error is generated between the original data and the noise-added data as shown in Fig. 24A. In contrast, by adding noise with uniform distribution by the augmentation processing as shown in Fig. 24C, the error between the original data and the augmented data decreases.

<3. Modifications>

The embodiment of the present technology has been specifically described above, but the present technology is not limited to the above-described embodiment, and various modifications based on the technical idea of the present technology can be made.

The embodiment has described that the terminal device 100 is a smartphone, but in addition to the smartphone, the terminal device 100 can be anything, personal computer, tablet terminal, camera, wearable device, smart speaker, game machine, server device 300, Internetenabled pet/humanoid robot, various sensor devices, various internet of things (IoT) devices, as long as the device can transmit information to the outside.

In the embodiment, the regional mesh is used, but the present technology is not limited to the regional mesh. Anything that can be treated as statistical data can be applied, for example, frequency of use of pictogram used by a user in character input in the terminal device 100, frequency of use of an application operating in the terminal device 100, measured value of local temperature, and the like.

In the embodiment, the higher-order data is generated from the lower-order data by using the bit value set in the regional mesh. However, in a case where the lower-order data is GPS latitude/longitude information, by deleting the last multiple digits of the value of the latitude/longitude information, the latitude/longitude information as the higher-order data can be generated.

Furthermore, in a case where the lower-order data is all types of pictograms used for character input in a smartphone and the like, the higher-order data can be generated by classifying the types of pictograms by, for example, a higher-level concept such as human, animal, mark, and food. Furthermore, in a case where data is numerical data such as temperature, the lower-order data can be a value including digits to the right of the decimal point (37.1, 38.2, and the like) and the higher-order data can be an integer value (37, 38, and the like). Moreover, in a case where data is age, it is also possible to set the lower-order data to the age including the last digit (35 years old, 47 years old, and the like), and to set the higher-order data to the age group that does not include the last digit (30s, 40s, and the like).

In the embodiment, the hierarchical structure of data has two levels, but data may have the hierarchical structure with three or more levels.

The present technology can also have the following configurations.

(1) A data processing device including:

a noise distribution prediction unit configured to predict distribution of noise in noise-added data generated by adding the noise to original data in an external noise-adding device; and
an augmentation processing unit configured to perform augmentation processing on the noise-added data on the basis of a prediction result of the noise distribution.

(2) The data processing device according to (1), in which in the noise-adding device, the noise is added to each of lower-order data of a lower level that is the original data and higher-order data that is data of a higher level than the lower level.

(3) The data processing device according to (2), in which the higher-order data is generated from the lower-order data in the external device.

(4) The data processing device according to any one of (1) to (3), in which higher-order noise-added data with the noise added to the higher-order data in the noise-adding device and lower-order noise-added data with the noise added to the lower-order data include bit strings.

(5) The data processing device according to any one of (1) to (4), in which the noise distribution prediction unit predicts the noise distribution in the lower-order noise-added data by comparing the higher-order noise-added data with the lower-order noise-added data and determining whether or not bits constituting a bit string of the lower-order noise-added data is the noise.

(6) The data processing device according to (5), further including a data extension unit configured to perform extension processing on the higher-order noise-added data in order to compare the higher-order noise-added data with the lower-order noise-added data.

(7) The data processing device according to (6), in which the data extension unit extends a bit string of the higher-order noise-added data in order to cause a number of digits of the bit string of the higher-order noise-added data to agree with a number of digits of the bit string of the lower-order noise-added data.

(8) The data processing device according to any one of (1) to (7), in which the augmentation processing unit adds the noise to the noise-added data to increase an amount of data.

(9) The data processing device according to (8), in which the augmentation processing unit adds the noise to the noise-added data in order to decrease a coefficient of variation indicating variation in the noise distribution.

(10) The data processing device according to (9), further including a noise removal unit configured to remove the noise added by the augmentation processing unit to the original data.

(11) A data processing method including:

predicting distribution of noise in noise-added data generated by adding the noise to original data in an external noise-adding device; and
performing augmentation processing on the noise-added data on the basis of a prediction result of the noise distribution.

(12) A data processing program for causing a computer to execute a data processing method including:

predicting distribution of noise in noise-added data generated by adding the noise to original data in an external noise-adding device; and
performing augmentation processing on the noise-added data on the basis of a prediction result of the noise distribution.

REFERENCE SIGNS LIST

| | |
|---|---|
| 200 | Noise-adding device |
| 405 | Data extension unit |
| 406 | Noise distribution prediction unit |
| 407 | Augmentation processing unit |
| 400 | Data processing device |

**Claims**

1. A data processing device comprising:

   a noise distribution prediction unit configured to predict distribution of noise in noise-added data generated by adding the noise to original data in an external noise-adding device; and
   an augmentation processing unit configured to perform augmentation processing on the noise-added data on a basis of a prediction result of the noise distribution.

2. The data processing device according to claim 1, wherein
   in the noise-adding device, the noise is added to each of lower-order data of a lower level that is the original data and higher-order data that is data of a higher level than the lower level.

3. The data processing device according to claim 2, wherein
   the higher-order data is generated from the lower-order data in the external device.

4. The data processing device according to claim 1, wherein
   higher-order noise-added data with the noise added to the higher-order data in the noise-adding device and lower-order noise-added data with the noise added to the lower-order data include bit strings.

5. The data processing device according to claim 1, wherein
   the noise distribution prediction unit predicts the noise distribution in the lower-order noise-added data by comparing the higher-order noise-added data with the lower-order noise-added data and determining whether or not bits constituting a bit string of the lower-order noise-added data is the noise.

6. The data processing device according to claim 5, further comprising
   a data extension unit configured to perform extension processing on the higher-order noise-added data in order to compare the higher-order noise-added data with the lower-order noise-added data.

7. The data processing device according to claim 6, wherein
   the data extension unit extends a bit string of the higher-order noise-added data in order to cause a number of digits of the bit string of the higher-order noise-added data to agree with a number of digits of the bit string of the lower-order noise-added data.

8. The data processing device according to claim 1, wherein
   the augmentation processing unit adds the noise to the noise-added data to increase an amount of data.

9. The data processing device according to claim 8, wherein
   the augmentation processing unit adds the noise to the noise-added data in order to decrease a coefficient of variation indicating variation in the noise distribution.

10. The data processing device according to claim 9, further comprising
    a noise removal unit configured to remove the noise added by the augmentation processing unit to the original data.

11. A data processing method comprising:

    predicting distribution of noise in noise-added data generated by adding the noise to original data in an external noise-adding device; and

performing augmentation processing on the noise-added data on a basis of a prediction result of the noise distribution.

12. A data processing program for causing a computer to execute a data processing method comprising:

predicting distribution of noise in noise-added data generated by adding the noise to original data in an external noise-adding device; and

performing augmentation processing on the noise-added data on a basis of a prediction result of the noise distribution.

FIG. 1

EP 4 123 491 A1

## FIG. 2

| | 10,000 SAMPLES | 100,000 SAMPLES | 1 MILLION SAMPLES | 10 MILLION SAMPLES | 100 MILLION SAMPLES |
|---|---|---|---|---|---|
| DICTIONARY SIZE 10 | A 0.418 | B 0.124 | C 0.027 | D 0.020 | E 0.017 |
| DICTIONARY SIZE 100 | F 0.909 | G 0.421 | H 0.232 | I 0.186 | J 0.140 |
| DICTIONARY SIZE 1000 | K 1.033 | L 1.142 | M 0.940 | N 0.467 | P 0.380 |

FIG. 3

# FIG. 4

PRIVACY INDEX AND ERROR
d=700,n=200k,k=32,h=2,m=64

EP 4 123 491 A1

FIG. 5

EP 4 123 491 A1

# FIG. 6

A
ORIGINAL DATA DISTRIBUTION
(SAMPLE SIZE: LARGE)

B
NOISE DISTRIBUTION

UNIFORM

C
TOTALIZE IN CLOUD
(DATA INCREASES UNIFORMLY BY NOISE)

D
REMOVE NOISE
(ERROR IS SMALL)

E
ORIGINAL DATA DISTRIBUTION
(SAMPLE SIZE: SMALL)

F
NOISE DISTRIBUTION (VARIATION)
(BROKEN LINE: IDEAL UNIFORM NOISE)

VARIATION

G
TOTALIZE IN CLOUD
(DATA INCREASES WITH VARIATION BY NOISE)

H
REMOVE NOISE
(ERROR IS LARGE)

EP 4 123 491 A1

# FIG. 7

*FIG. 8*

## FIG. 9

EP 4 123 491 A1

## FIG. 10

*FIG. 11*

LOWER LEVEL

A

| | | | |
|---|---|---|---|
| 0<br>M3-3 | 0<br>M3-4 | 1<br>M4-3 | 0<br>M4-4 |
| 0<br>M3-1 | 0<br>M3-2 | 0<br>M4-1 | 0<br>M4-2 |
| 0<br>M1-3 | 0<br>M1-4 | 0<br>M2-3 | 0<br>M2-4 |
| 0<br>M1-1 | 0<br>M1-2 | 0<br>M2-1 | 0<br>M2-2 |

HIGHER LEVEL

B

| | |
|---|---|
| 0<br>M3 | 1<br>M4 |
| 0<br>M1 | 0<br>M2 |

# FIG. 12

LOWER LEVEL

A

| 0 M3-3 | 1(n) M3-4 | 1 M4-3 | 0 M4-4 |
| 0 M3-1 | 0 M3-2 | 0 M4-1 | 0 M4-2 |
| 0 M1-3 | 0 M1-4 | 1(n) M2-3 | 0 M2-4 |
| 1(n) M1-1 | 0 M1-2 | 0 M2-1 | 1(n) M2-2 |

HIGHER LEVEL

B

| 0 M3 | 1 M4 |
| 1(n) M1 | 0 M2 |

# FIG. 13

300

301
CONTROL UNIT

302
COMMUNICATION UNIT

BUS

DATA PROCESSING DEVICE
400

STORAGE UNIT
303

# FIG. 14

400

401

DICTIONARY
GENERATION UNIT

402

DICTIONARY
STORAGE UNIT

403

LOWER-ORDER
DECODING UNIT

404

HIGHER-ORDER
DECODING UNIT

405

DATA EXTENSION
UNIT

406

NOISE DISTRIBUTION
PREDICTION UNIT

407

AUGMENTATION
PROCESSING UNIT

408

DECODING UNIT

409

STATISTICAL
ANALYSIS UNIT

# FIG. 15

| 52 M3-3 | 80 M3-4 | 375 M4-3 | 185 M4-4 |
| 65 M3-1 | 39 M3-2 | 6325 M4-1 | 1980 M4-2 |
| 75 M1-3 | 49 M1-4 | 820 M2-3 | 20 M2-4 |
| 84 M1-1 | 97 M1-2 | 215 M2-1 | 19 M2-2 |

# FIG. 16

```
        ┌──────────────┐
        │    START     │
        └──────┬───────┘
               │                      S11
     ┌─────────▼──────────────┐
     │ DETERMINE ORIGINAL DATA│
     └─────────┬──────────────┘
               │                      S12
     ┌─────────▼──────────────┐
     │ PERFORM LOWER-ORDER DATA│
     │ CONVERSION PROCESSING  │
     └─────────┬──────────────┘
               │                      S13
     ┌─────────▼──────────────┐
     │ PERFORM HIGHER-ORDER DATA│
     │ CONVERSION PROCESSING  │
     └─────────┬──────────────┘
               │                      S14
     ┌─────────▼──────────────┐
     │ ENCODE LOWER-ORDER DATA│
     └─────────┬──────────────┘
               │                      S15
     ┌─────────▼──────────────┐
     │ ENCODE HIGHER-ORDER DATA│
     └─────────┬──────────────┘
               │                      S16
     ┌─────────▼──────────────┐
     │      GENERATE LOG      │
     └─────────┬──────────────┘
               │                      S17
     ┌─────────▼──────────────┐
     │      TRANSMIT LOG      │
     └─────────┬──────────────┘
               │
        ┌──────▼───────┐
        │     END      │
        └──────────────┘
```

# FIG. 17

```
┌─────────────┐
│    START    │
└─────────────┘
       │
       ▼                                    S21
┌──────────────────────────────────────────┐
│              RECEIVE LOG                   │
└──────────────────────────────────────────┘
       │
       ▼                                    S22
┌──────────────────────────────────────────┐
│   AGGREGATE LOWER-ORDER NOISE-ADDED DATA   │
└──────────────────────────────────────────┘
       │
       ▼                                    S23
┌──────────────────────────────────────────┐
│   AGGREGATE HIGHER-ORDER NOISE-ADDED DATA  │
└──────────────────────────────────────────┘
       │
       ▼                                    S24
┌──────────────────────────────────────────┐
│ PERFORM DECODING AND NOISE REMOVAL PROCESSING │
│     ON HIGHER-ORDER NOISE-ADDED DATA       │
└──────────────────────────────────────────┘
       │
       ▼                                    S25
┌──────────────────────────────────────────┐
│ PERFORM DECODING AND NOISE REMOVAL PROCESSING │
│     ON LOWER-ORDER NOISE-ADDED DATA        │
└──────────────────────────────────────────┘
       │
       ▼                                    S26
┌──────────────────────────────────────────┐
│           EXTEND HIGHER-ORDER DATA         │
└──────────────────────────────────────────┘
       │
       ▼                                    S27
┌──────────────────────────────────────────┐
│           PREDICT NOISE DISTRIBUTION       │
└──────────────────────────────────────────┘
       │
       ▼                                    S28
┌──────────────────────────────────────────┐
│        PERFORM AUGMENTATION PROCESSING     │
└──────────────────────────────────────────┘
       │
       ▼                                    S29
┌──────────────────────────────────────────┐
│              AGGREGATE DATA                │
└──────────────────────────────────────────┘
       │
       ▼                                    S30
┌──────────────────────────────────────────┐
│              DECODE DATA                   │
└──────────────────────────────────────────┘
       │
       ▼
┌─────────────┐
│     END     │
└─────────────┘
```

# FIG. 18

A

| HIGHER-ORDER NOISE-ADDED DATA | 1 (M1) | | | | 0 (M2) | | | | 0 (M3) | | | | 1 (M4) | | | |
|---|---|---|---|---|---|---|---|---|---|---|---|---|---|---|---|---|
| LOWER-ORDER NOISE-ADDED DATA | 1 | 0 | 0 | 0 | 0 | 1 | 1 | 0 | 0 | 0 | 0 | 1 | 0 | 0 | 1 | 0 |
| | M1-1 | M1-2 | M1-3 | M1-4 | M2-1 | M2-2 | M2-3 | M2-4 | M3-1 | M3-2 | M3-3 | M3-4 | M4-1 | M4-2 | M4-3 | M4-4 |

B

| HIGHER-ORDER NOISE-ADDED DATA | 1 (M1) | | | | 0 (M2) | | | | 0 (M3) | | | | 1 (M4) | | | |
|---|---|---|---|---|---|---|---|---|---|---|---|---|---|---|---|---|
| HIGHER-ORDER EXTENSION | 1 | 1 | 1 | 1 | 0 | 0 | 0 | 0 | 0 | 0 | 0 | 0 | 1 | 1 | 1 | 1 |
| LOWER-ORDER NOISE-ADDED DATA | 1 | 0 | 0 | 0 | 0 | 1 | 1 | 0 | 0 | 0 | 0 | 1 | 0 | 0 | 1 | 0 |
| | M1-1 | M1-2 | M1-3 | M1-4 | M2-1 | M2-2 | M2-3 | M2-4 | M3-1 | M3-2 | M3-3 | M3-4 | M4-1 | M4-2 | M4-3 | M4-4 |

EP 4 123 491 A1

EP 4 123 491 A1

## FIG. 19

| HIGHER-ORDER NOISE-ADDED DATA | 1 M1 | | | | 0 M2 | | | | 0 M3 | | | | 1 M4 | | | |
|---|---|---|---|---|---|---|---|---|---|---|---|---|---|---|---|---|
| HIGHER-ORDER EXTENSION | 1 | 1 | 1 | 1 | 0 | 0 | 0 | 0 | 0 | 0 | 0 | 0 | 1 | 1 | 1 | 1 |
| LOWER-ORDER NOISE-ADDED DATA | 1 M1-1 | 0 M1-2 | 0 M1-3 | 0 M1-4 | 0 M2-1 | 1 M2-2 | 1 M2-3 | 0 M2-4 | 0 M3-1 | 0 M3-2 | 0 M3-3 | 1 M3-4 | 0 M4-1 | 0 M4-2 | 1 M4-3 | 0 M4-4 |
| PROBABILITY OF TRUE VALUE | HIGH | | | | | LOW | LOW | | | | | LOW | | | HIGH | |
| TRUE VALUE PROBABILITY VALUE | 0.8 | | | | | 0.2 | 0.2 | | | | | 0.2 | | | 0.8 | |

# FIG. 20

AMOUNT OF NOISE

DICTIONARY SIZE

# FIG. 21

START

SELECT DATA TYPE IN WHICH
PROCESSING IS PERFORMED — S41

ADD NOISE TO GENERATE
NOISE ADDITION DATA — S42

CALCULATE CV — S43

IS CV IMPROVED? — S44

No → n TIMES? — S48

No

Yes

ADOPT — S45

UPDATE CV — S46

HAS SAMPLE SIZE
REACHED PREDETERMINED
VALUE? — S47

No

Yes

END

*FIG. 22*

# FIG. 23

LEFT: ORIGINAL DATA
RIGHT: AUGMENTED DATA

## FIG. 24

A

ORIGINAL DATA AND NOISE-ADDED DATA

NOISE-ADDED
DATA

ORIGINAL
DATA

COUNT VALUE

DICTIONARY SIZE

B

NOISE

UNIFORM NOISE

ADDED NOISE
(WITH VARIATION)

COUNT VALUE

DICTIONARY SIZE

C

ORIGINAL DATA AND AUGMENTED DATA

AUGMENTED
DATA

ORIGINAL
DATA

COUNT VALUE

DICTIONARY SIZE

EP 4 123 491 A1

## INTERNATIONAL SEARCH REPORT

International application No.

PCT/JP2021/010736

### A.　CLASSIFICATION OF SUBJECT MATTER
Int. Cl. G06F21/62(2013.01)i
FI: G06F21/62 345

According to International Patent Classification (IPC) or to both national classification and IPC

### B.　FIELDS SEARCHED

Minimum documentation searched (classification system followed by classification symbols)
Int. Cl. G06F21/62

Documentation searched other than minimum documentation to the extent that such documents are included in the fields searched
Published examined utility model applications of Japan　　1922-1996
Published unexamined utility model applications of Japan　1971-2021
Registered utility model specifications of Japan　　　　 1996-2021
Published registered utility model applications of Japan　1994-2021

Electronic data base consulted during the international search (name of data base and, where practicable, search terms used)

### C.　DOCUMENTS CONSIDERED TO BE RELEVANT

| Category* | Citation of document, with indication, where appropriate, of the relevant passages | Relevant to claim No. |
|---|---|---|
| Y<br>A | WO 2013/008653 A1 (NTT DOCOMO INC.) 17 January 2013, paragraphs [0002], [0005], [0025], [0027], [0035], [0062], [0072], [0073], fig. 1, 16 | 1, 8, 11-12<br>2-7, 9-10 |
| Y<br>A | JP 2017-055244 A (TOSHIBA CORP.) 16 March 2017, paragraphs [0010], [0012], [0014], [0021], [0023], [0024], [0046], [0049], fig. 2 | 1, 8, 11-12<br>2-7, 9-10 |
| A | WO 2012/128389 A1 (NEC CORP.) 27 September 2012, p. 6, lines 6-8, p. 9, lines 18, 19, p. 12, lines 8-10, fig. 1 | 2-7 |
| A | JP 2018-169880 A (TOYOTA MOTOR CORP.) 01 November 2018, paragraph [0077], fig. 6 | 2-7 |

☒　Further documents are listed in the continuation of Box C.　　☒　See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search<br>07.05.2021 | Date of mailing of the international search report<br>18.05.2021 |
|---|---|
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

| | International application No. |
|---|---|
| | PCT/JP2021/010736 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2012/165518 A1 (NEC CORP.) 06 December 2012, p. 11, lines 22-24, p. 21, line 29 to p. 22, line 5, p. 22, line 30 to p. 23, line 1, p. 23, lines 17-20, p. 24, lines 1, 2, fig. 17, 21 | 9-10 |

Form PCT/ISA/210 (continuation of second sheet) (January 2015)

INTERNATIONAL SEARCH REPORT

Information on patent family members

International application No.

PCT/JP2021/010736

| Patent Documents referred to in the Report | Publication Date | Patent Family | Publication Date |
|---|---|---|---|
| WO 2013/008653 A1 | 17.01.2013 | EP 2733674 A1 paragraphs [0002], [0005], [0025], [0027], [0035], [0062], [0072], [0073], fig. 1, 16 US 2014/0139552 A1 CN 103339661 A JP 2013-25329 A | |
| JP 2017-055244 A | 16.03.2017 | (Family: none) | |
| WO 2012/128389 A1 | 27.09.2012 | EP 2690571 A1 paragraphs [0029], [0059], [0078], fig. 1 US 2014/0013438 A1 CN 103534702 A | |
| JP 2018-169880 A | 01.11.2018 | (Family: none) | |
| WO 2012/165518 A1 | 06.12.2012 | US 2014/0122442 A1 paragraphs [0129], [0210], [0211], [0219], [0224], [0227], fig. 17, 21 | |

Form PCT/ISA/210 (patent family annex) (January 2015)